# EUROPEAN PATENT APPLICATION

(11) **EP 4 759 203 A1**
(43) Date of publication of application: **17.06.2026**
(21) Application number: 26154678.2
(22) Date of filing: 05.09.2022
(51) Int. Cl.: A47J 31/00, A47J 31/56

(54) **COFFEE MACHINE FOR PRODUCING A HOT AND COLD INFUSION**

(30) Priority: 04.10.2021 IT 202100025415
(62) Divisional of application: 22772972.0
(71) Applicant: De' Longhi Appliances S.r.l., 31100 Treviso (IT)
(72) Inventor: PANCIERA, Antonio, 31100 Treviso (IT); BENEDETTI, Alessandro, 31100 Treviso (IT); ROSETTA, Simone, 31100 Treviso (IT); ROSSETTO, Giovanni, 31100 Treviso (IT)
(74) Representative: Rapisardi, Mariacristina

(57) **Abstract**

The control method for controlling a coffee machine having an electronic controller, a hydraulic circuit comprising a user interface for the selection of dispensing cycles for dispensing cold and hot infusions, an infuser (2), a water tank (3), a hot water generator (6), a supply pump (7) for supplying water to the hot water generator (6), characterised in that said electronic controller receives through said interface a selection of a dispensing cycle for dispensing a cold or hot infusion before deciding whether to instruct the performance of a pre-heating step for pre-heating said hot water generator in which it keeps said hot water generator activated and said supply pump deactivated.

## Description

The present invention relates to a coffee machine for preparing a cold and hot coffee infusion.

It is known that traditional coffee machines particularly for domestic use are configured to produce a hot coffee infusion obtained by preliminarily making the infusion water transit from a boiler. The most evolved machines associate with this function also the possibility to provide steam, for example for heating water in a cup for preparing a tea infusion.

With the evolution of users' tastes, cold coffee infusions are also becoming popular.

Therefore, the need has been perceived to redesign or adapt coffee machines, already rather complex in themselves, to offer the possibility of dispensing a cold coffee infusion, too.

In some cases, the preparation of a cold coffee infusion is possible by simply keeping the boiler deactivated during the activation of the infusion water supply pump.

In other cases the introduction of a boiler by-pass has been chosen where the infusion water is diverted in the case of a request for a cold coffee infusion.

The invention has the purpose of providing an alternative to known boiler by-pass systems within the context of a complex hydraulic circuit also including the function of steam production in addition to the function of cold and hot infusion water production.

Within the context of this technical task an object of the invention is to realise a coffee machine with high flexibility of use which can dispense as preferred a hot or cold infusion or steam through a simple but extremely functional hydraulic circuit.

The technical task, as well as these and other objects, according to the present invention are achieved by realising a coffee machine comprising a hydraulic circuit comprising an infuser, a water tank, a steam generator, a steam dispenser, a hot water generator, a supply pump for supplying water to the steam generator and to the hot water generator, characterised in that the hydraulic circuit further comprises a by-pass line of said hot water generator, a first and a second flow switcher which can be switched between a first switching configuration where said supply pump, said hot water generator and said infuser are connected in cascade, a second switching configuration where said supply pump and said infuser are connected in cascade through said by-pass line of said hot water generator, and a third switching configuration where said supply pump and said steam generator are connected in cascade.

In a preferred embodiment of the invention said first and second flow switcher comprise a first and a second three-way solenoid valve.

In a preferred embodiment of the invention said by-pass line of the hot water generator connects the delivery of the supply pump to the infuser inlet.

In a preferred embodiment of the invention, said hydraulic circuit comprises a connection line between the delivery of the supply pump and the inlet of the hot water generator, a connection line between the delivery of the supply pump and the inlet of the steam generator, a connection line between the outlet of the hot water generator and the inlet of the infuser, a connection line between the outlet of the steam generator and the inlet of the steam dispenser.

In a preferred embodiment of the invention said hydraulic circuit comprises a discharge line for discharging the residual pressure in the infuser after dispensing.

In a preferred embodiment of the invention, said hydraulic circuit comprises a third flow switcher having a single inlet connected to the discharge line and to an outlet of the steam generator, a first outlet connected to the steam dispenser and a second outlet connected to a collection tank for collecting the discharge water of the infuser.

In a preferred embodiment of the invention said infuser has an infusion cylinder having a closed configuration for the infusion in which the discharge valve along the discharge line is closed, and an open configuration for discharging the residual pressure in which said discharge valve along the discharge line is open.

In a first embodiment of the invention said first flow switcher comprises a single inlet connected to the delivery of the pump, a first outlet connected to an inlet of said hot water generator and a second outlet connected to an inlet of the steam generator.

In a first embodiment of the invention said second flow switcher comprises a first inlet connected to an outlet of the hot water generator, a second inlet connected to a delivery of the pump along the by-pass line of the hot water generator, and a single outlet connected to an inlet of the infuser. In a further embodiment of the invention said first flow switcher comprises a single inlet connected to a delivery of the pump, a first outlet connected to an inlet of said hot water generator and a second outlet connected to a single inlet of said second flow switcher.

In a further embodiment of the invention said second flow switcher comprises a first outlet connected to an inlet of said infuser along said by-pass line of the hot water generator and a second outlet connected to an inlet of the steam generator.

Further features and advantages of the invention will become more apparent from the description of a preferred, but not exclusive, embodiment of the coffee machine according to the invention, which is illustrated by way of approximate and non-limiting example in the attached drawings, of which:
figure 1 shows a diagram of a coffee machine in compliance with a first embodiment, where the flow switchers are in a suitable configuration for dispensing a cold coffee infusion;
figure 2 shows the diagram of the coffee machine of figure 1, where the flow switchers are in a suitable configuration for dispensing a hot coffee infusion;
figure 3 shows a diagram of the coffee machine of figure 1, where the flow switchers are in a suitable configuration for dispensing steam;
figure 4 shows a diagram of a coffee machine in compliance with a further embodiment, where the flow switchers are in a suitable configuration for dispensing a cold coffee infusion;
figure 5 shows the diagram of the coffee machine of figure 4, where the flow switchers are in a suitable configuration for dispensing a hot coffee infusion;
figure 6 shows a diagram of the coffee machine of figure 4, where the flow switchers are in a suitable configuration for dispensing steam;
figure 7 shows a simplified hydraulic circuit with which a performance method of a dispensing cycle of a cold or hot infusion according to the invention can be implemented.

Equivalent parts shall be indicated in the following description with the same numerical reference. With reference to the cited figures, a coffee machine is thus shown and indicated in its entirety by reference number 1.

The hydraulic circuit of the coffee machine 1 comprises an infuser 2, a water tank 3, a steam generator 4, a steam dispenser 5, a hot water generator 6, and a pump 7 for supplying water to the steam generator 4 and to the hot water generator 6.

In the illustrated solutions the steam generator 4 and the hot water generator 6 can be formed by instantaneous or storage boilers.

Between the supply pump 7 and the water tank 3 a flow meter 8 may be provided.

Between the supply pump 7 and the hot water generator 6 a pressure damper 9 may also be provided.

Advantageously, the hydraulic circuit of the coffee machine 1 comprises a by-pass line 10 of the hot water generator 6, a first flow switcher 12 and a second flow switcher 13.

The by-pass line 10 of the hot water generator 6 connects the delivery of the supply pump 7 to the infuser inlet 2.

The first flow switcher 12 and the second flow switcher 13 can be switched by the electronic controller of the coffee machine 1 between a first switching configuration where the supply pump 7, the hot water generator 6 and the infuser 2 are connected in cascade, a second switching configuration where the supply pump 7 and the infuser 2 are connected in cascade through the by-pass line 10 of the hot water generator 6, and a third switching configuration where the supply pump 7 and the steam generator 4 are connected in cascade.

The first flow switcher 12 comprises a first three-way solenoid valve.

The second flow switcher 13 comprises a second three-way solenoid valve.

The hydraulic circuit of the coffee machine 1 further comprises a discharge line 14 for discharging the residual pressure in the infusion chamber of the infuser 2 after dispensing.

Preferably the hydraulic circuit of the coffee machine 1 provides for a third flow switcher 15, particularly a three-way solenoid valve having a single inlet 16 connected to the discharge line 14 and to the outlet 17 of the steam generator 4, a first outlet 18 connected to the steam dispenser 5 and a second outlet 19 connected to a collection tank 20 for collecting the discharge water of the infuser 2 through a hydraulic line 42.

The hydraulic circuit of the coffee machine 1 further comprises a connection line 26 between the delivery of the supply pump 7 and the inlet of the hot water generator 6, a connection line 27 between the delivery of the supply pump 7 and the inlet of the steam generator 4, a connection line 28 between the outlet of the hot water generator 6 and the inlet of the infuser 2, a connection line 29 between the outlet of the steam generator 4 and the inlet of the steam dispenser 4.

The infuser 2 has a mechanical valve 11 having a discharge configuration in which it places in communication the infusion chamber with the discharge line 14, and an infusion configuration in which it places in communication the connection line 28 with the discharge line 14.

In the illustrated solutions, the infuser 2 provides for an open infusion cylinder 21 supported by the frame of the coffee machine 1 in a movable way between an engagement position with an overlying closing piston 22 for closing the open infusion chamber delimited by the infusion cylinder 21 and making the infusion, and a disengagement position of the overlying closing piston 22 for introducing a fresh load 23 of coffee powder or for extracting an exhausted load 23 of coffee powder 23.

The infusion cylinder 21 has a relevant dispensing section 24 for dispensing the infusion into a cup 25.

The movement of the infusion cylinder 21 for the typical closing is a motion comprising an initial rotatory component for the alignment of the axis thereof with the axis of the closing piston 22 and a final translational component for the coaxial engagement with the closing piston 22.

The closing piston 22 is in turn supported by the frame of the coffee machine 1 with the possibility of a brief axial oscillation from a position to which the discharge configuration of the mechanical valve 11 corresponds, which is assumed when it is disengaged from the infusion cylinder 21, to a position which corresponds to the infusion configuration of the mechanical valve 11, assumed due to the effect of the engagement with the infusion cylinder 21.

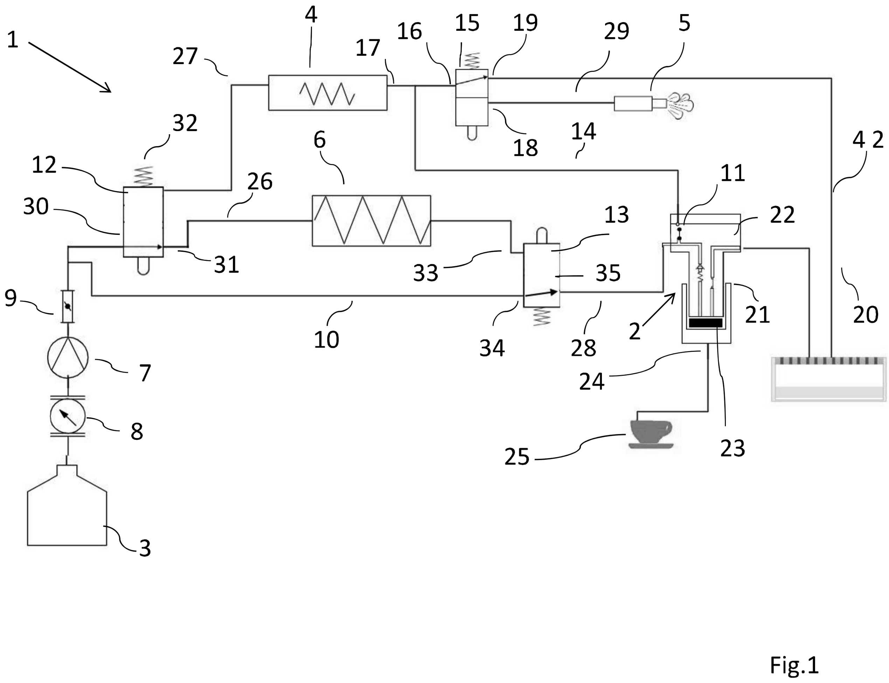

Reference is now made to the first embodiment of the invention illustrated in figures 1 - 3.

The first flow switcher 12 comprises a single inlet 30, connected to the delivery of the supply pump 7, a first outlet 31 connected to the inlet of the hot water generator 6 through the line 26 and a second outlet 32 connected to the inlet of the steam generator 4 through the line 27.

The second flow switcher 13 comprises a first inlet 33 connected to the outlet of the hot water generator 6, a second inlet 34 connected to the delivery of the supply pump 7 through the by-pass line 10 of the hot water generator 6, and a single outlet 35 connected to the inlet of the infuser 2 through the line 28.

The operation of the hydraulic circuit of the coffee machine 1 is as follows.

For producing a cold coffee infusion the configuration of figure 1 of the flow switchers 12, 13 and 15 is used in which in the first flow switcher 12 the single inlet 30 is connected to the first outlet 31, in the second flow switcher 13 the second inlet 34 is connected to the single outlet 35, and in the third flow switcher 15 the single inlet 16 is connected to the second outlet 19.

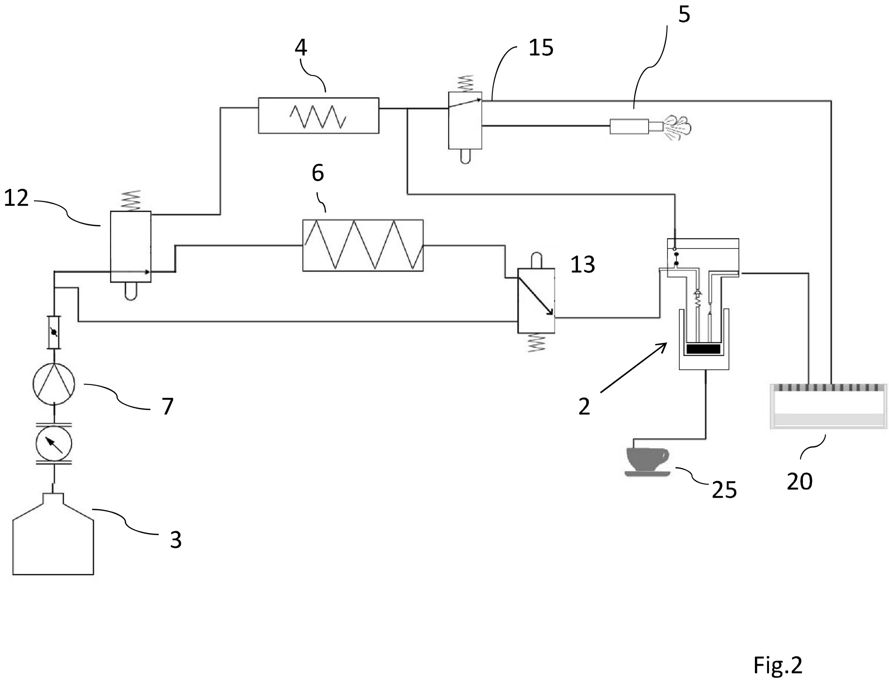

For producing a hot coffee infusion the configuration of figure 2 of the flow switchers 12, 13 and 15 is used in which in the first flow switcher 12 the single inlet 30 is connected to the first outlet 31, in the second flow switcher 13 the first inlet 33 is connected to the single outlet 35, and in the third flow switcher 15 the single inlet 16 is connected to the second outlet 19.

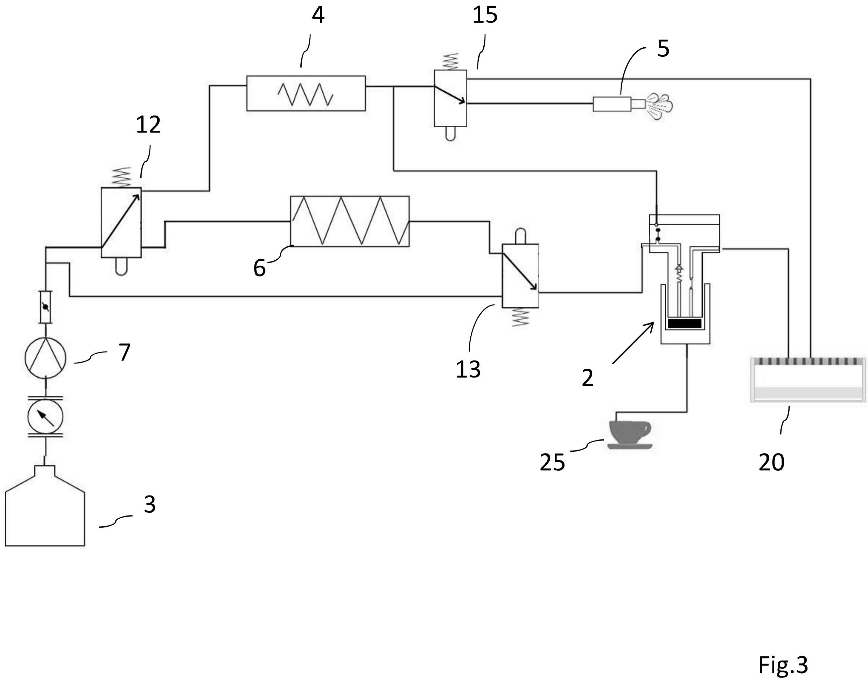

For producing steam the configuration of figure 3 of the flow switchers 12, 13 and 15 is used in which in the first flow switcher 12 the single inlet 30 is connected to the second outlet 32, in the second flow switcher 13 the first inlet 33 is connected to the single outlet 35, and in the third flow switcher 15 the single inlet 16 is connected to the first outlet 18.

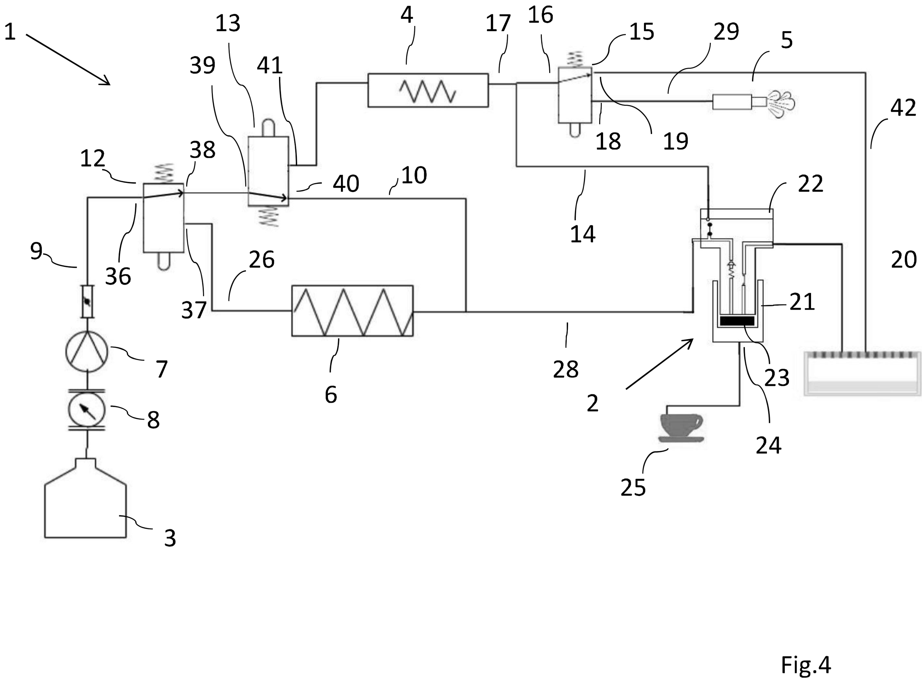

Reference is now made to the further embodiment of the invention illustrated in figures 4 - 6.

In this case the first flow switcher 12 comprises a single inlet 36 connected to the delivery of the supply pump 7, a first outlet 37 connected to the inlet of the hot water generator 6 through the line 26 and a second outlet 38 connected to a single inlet 39 of the second flow switcher 13.

The second flow switcher 13 comprises a first outlet 40 connected to the inlet of the infuser 2 through the by-pass line 10 of the hot water generator 6, and a second outlet 41 connected to the inlet of the steam generator 4 through the line 27.

The operation of the hydraulic circuit of the coffee machine 1 is as follows.

For producing a cold coffee infusion the configuration of figure 4 of the flow switchers 12, 13 and 15 is used in which in the first flow switcher 12 the single inlet 36 is connected to the second outlet 38, in the second flow switcher 13 the single inlet 39 is connected to the first outlet 40, and in the third flow switcher 15 the single inlet 16 is connected to the second outlet 19.

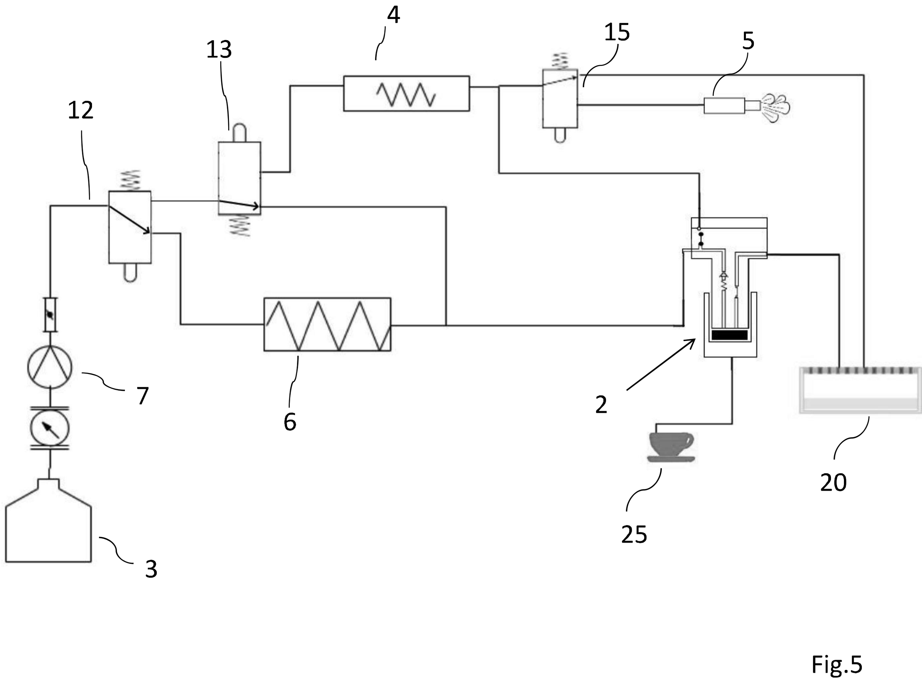

For producing a hot coffee infusion the configuration of figure 5 of the flow switchers 12, 13 and 15 is used in which in the first flow switcher 12 the single inlet 36 is connected to the first outlet 37, in the second flow switcher 13 the single inlet 39 is connected to the first outlet 40, and in the third flow switcher 15 the single inlet 16 is connected to the second outlet 19.

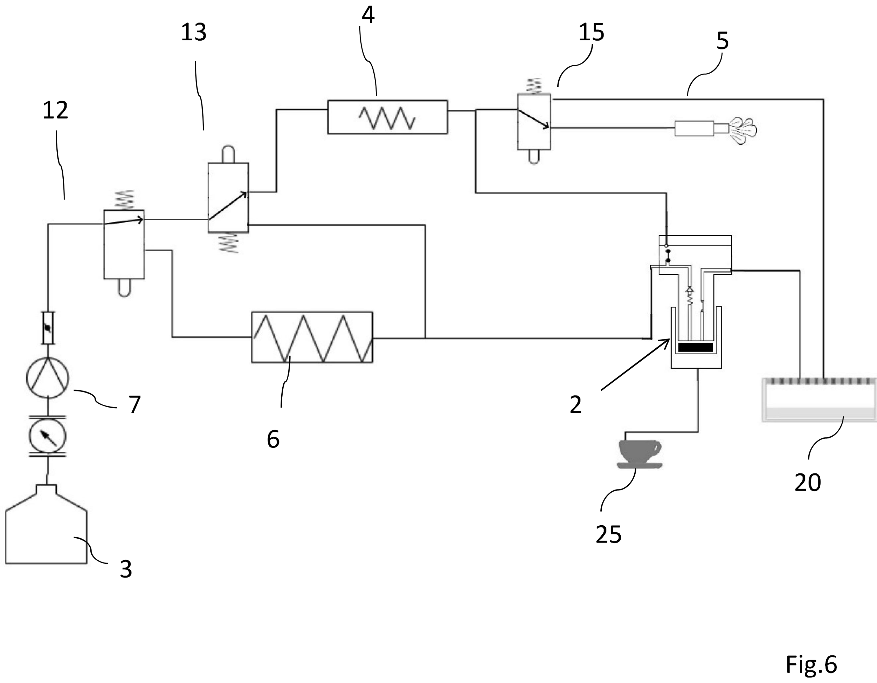

For producing steam the configuration of figure 6 of the flow switchers 12, 13 and 15 is used in which in the first flow switcher 12 the single inlet 36 is connected to the second outlet 38, in the second flow switcher 13 the single inlet 39 is connected to the second outlet 41, and in the third flow switcher 15 the single inlet 16 is connected to the first outlet 18.

When the infusion cylinder 21 is open, i.e. when the infuser 21 is not in the dispensing configuration, the connection line 28 is in communication with the discharge line as the mechanical valve 11 is open.

The solution illustrated in figures 1 - 3 may be preferred in order to prevent the undesired emptying of the hot water generator 6 when the infuser 2 is connected to the discharge line 14. In fact, in this implementation the first and the second flow switcher 12, 13 placed upstream and downstream of the hot water generator 6 may be positioned to close the inlet and the delivery of the hot water generator 6 thus guaranteeing that it is not emptied in an uncontrolled manner when the infuser 2 is connected to the discharge line 14 and every dispensing cycle can therefore always be performed with the same amount of infusion water; this also prevents the excess water for refilling the hot water generator 6 from quickly filling the tank 20, thus having to empty it continuously, which is not very appreciated by the user.

The solution illustrated in figures 4 - 6 has the advantage that the flow switchers 12, 13, in the form of three-way solenoid valves, are arranged along cold channels of the hydraulic circuit of the coffee machine and are therefore not exposed to the formation and accumulation of limescale deposits that could gradually obstruct the infusion water passage ways with the inevitable consequence of a reduction of the useful water flow to the infusion.

The present invention also discloses a method for preparing a cold infusion.

As is known, as soon as a traditional coffee machine is switched on the electronic controller of the coffee machine commands a step of pre-heating the hot water generator thus imposing a waiting time before the user can select the dispensing cycle.

During this pre-heating step the electronic controller keeps the supply pump deactivated and the hot water generator activated until the latter reaches a predetermined temperature.

Only upon reaching this predetermined temperature value does the electronic controller of the coffee machine enable the user to select the dispensing cycle and, once the selection has been made, it activates the supply pump in order to perform the selected dispensing cycle.

Instead, according to the invention, it is possible for the user to select on an interface with the coffee machine, for example a touch screen display or keypad, a dispensing cycle for preparing an infusion before the electronic controller possibly commands the pre-heating step.

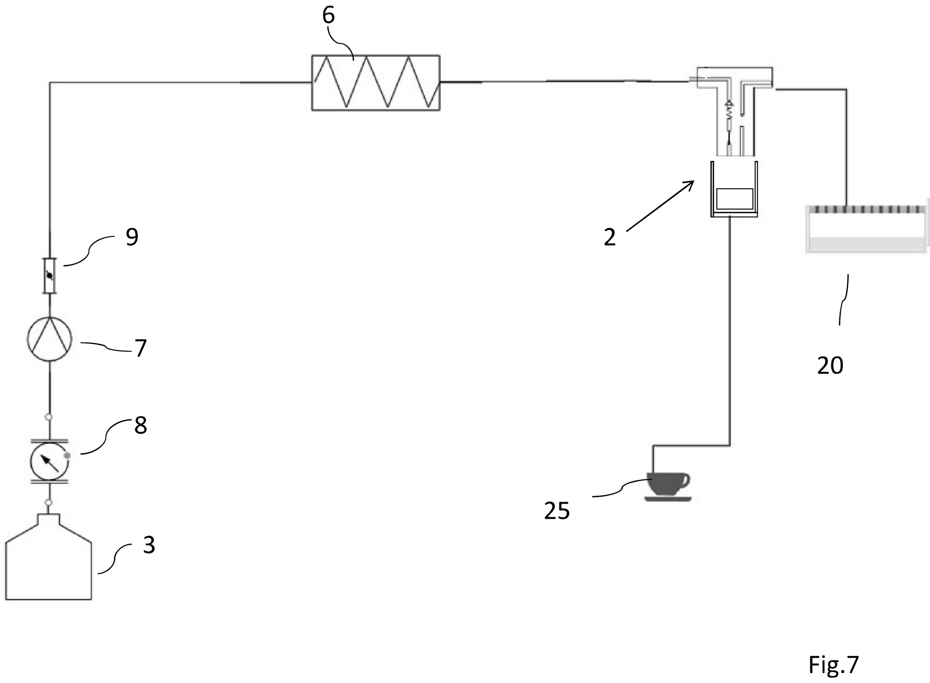

This innovative method for preparing an infusion, which can be implemented with a hydraulic circuit like those described above or even with a simpler hydraulic circuit such as the one illustrated in figure 7, solves the problem connected with the latent heat accumulated in the hot water generator 6 and the connected circuit, when a cycle is selected for dispensing a cold infusion after performing a hot infusion dispensing cycle.

This innovative method for preparing an infusion also prevents wasting electrical energy if a cold infusion is required as the pre-heating step is avoided.

Furthermore, with this innovative method which avoids the preheating step upon switching on the coffee machine if a cold infusion dispensing cycle is selected, the waiting time for having a cold infusion in the cup is shorter.

The performance of a dispensing cycle of a cold infusion can be commanded by the electronic controller of the coffee machine, in particular if the electronic controller is warned by a relevant hot water generator temperature sensor 6 of a lower hot water generator temperature 6 than a first threshold level T1, for example 50°C.

In particular, it may be envisaged that if the coffee machine, which is switched off after performing a hot infusion dispensing cycle, is switched on by the user by selecting a cold infusion dispensing cycle and the hot water generator 6 is at a lower temperature than the first threshold level T1 but higher than a second threshold level T2<T1, for example equal to 35°C, the electronic controller of the coffee machine activates a rinse of the hot water generator 6 with cold water that the supply pump 7 takes from the water tank 3 in order to cool down the hot water generator 6 to a temperature, less than T2, at which the electronic controller of the coffee machine can activate the dispensing cycle of a cold infusion selected by the user.

As mentioned, the hydraulic circuit illustrated in figure 7 is very simple, and envisages the performance of a cold infusion dispensing cycle in which the supply pump 7 is activated and the infusion water circulates through the hot water generator 6 which is kept deactivated.

The same control method can be applied to coffee machines with the circuits set out above where a by-pass of the hot water generator 6 is provided for the performance of a cold infusion dispensing cycle.

The coffee machine as conceived herein is susceptible to many modifications and variations, all falling within the scope of the inventive concept; further, all the details are replaceable by technically equivalent elements.

In practice, the materials used, as well as the dimensions, can be any according to the needs and the state of the art.

## Claims

1. A control method for controlling a coffee machine having an electronic controller, a hydraulic circuit comprising a user interface for the selection of dispensing cycles for dispensing cold and hot infusions, an infuser (2), a water tank (3), a hot water generator (6), a supply pump (7) for supplying water to the hot water generator (6), **characterised in that** said electronic controller receives through said interface a selection of a dispensing cycle for dispensing a cold or hot infusion before deciding whether to instruct the performance of a pre-heating step for pre-heating said hot water generator in which it keeps said hot water generator activated and said supply pump deactivated.

2. The control method for controlling a coffee machine according to the preceding claim, **characterised in that** said electronic controller instructs the performance of a dispensing cycle for dispensing a cold infusion if it receives a temperature signal of the hot water generator lower than a first threshold level T1.

3. A coffee machine (1) for executing a control method according to any preceding claims, **characterised in that** said electronic controller instructs the performance of said dispensing cycle for dispensing a cold infusion instructing the performance of a preliminary rinse of the hot water generator with fresh water from the water tank collected by the supply pump if the temperature of the hot water generator is lower than the first threshold level T1 but higher than a second threshold level T2<T1.
